# EUROPÄISCHE PATENTANMELDUNG

(11) **EP 2 605 367 A1**
(43) Veröffentlichungstag der Anmeldung: **19.06.2013**
(21) Anmeldenummer: 11192978.2
(22) Anmeldetag: 12.12.2011
(51) Int. Cl.: H02K 1/14, H02K 26/00, H02K 41/00, H02K 1/27

(54) **Transversalflussmaschine mit Halbach-Arrays**

(71) Anmelder: Siemens Aktiengesellschaft, 80333 München (DE)
(72) Erfinder: Hamann, Jens, 90765 Fürth (DE); Klöpzig, Markus, 91320 Ebermannstadt (DE); Stoiber, Dietmar, 90763 Fürth (DE); Wilke, Markus, 91054 Erlangen (DE)

(57) **Zusammenfassung**

Die Leistungsdichte von Transversalflussmaschinen soll verbessert werden. Daher wird eine Transversalflussmaschine mit einem ersten Aktivteil und einem zweiten Aktivteil (1) bereitgestellt, das zur Bewegung entlang einer vorgegebenen Bewegungsrichtung (2) relativ zu dem ersten Aktivteil mit diesem in magnetischer Wechselwirkung steht. Das zweite Aktivteil (1) ist mit einer Magneteinrichtung (6 bis 10) ausgestattet. Die Magneteinrichtung weist ein Halbach-Array auf. Damit kann auf Flusssammler in dem zweiten Aktivteil verzichtet werden, so dass das Gewicht der Transversalflussmaschine sinkt.

## Beschreibung

Die vorliegende Erfindung betrifft eine Transversalflussmaschine mit einem ersten Aktivteil und einem zweiten Aktivteil, das zur Bewegung entlang einer vorgegebenen Bewegungsrichtung relativ zu dem ersten Aktivteil mit diesem in magnetischer Wechselwirkung steht, wobei das zweite Aktivteil mit einer Magneteinrichtung ausgestattet ist.

Heutige Torque-Motoren besitzen typischerweise eine Leistungsdichte von 1 kW/kg. In sämtlichen technischen Zweigen, in denen derartige Motoren eingesetzt werden, ist man jedoch unter anderem auch bemüht, diese Leistungsdichte zu verbessern. Dies wäre insbesondere in der Automobilindustrie, besonders aber auch in der Flugzeugindustrie von Vorteil. Speziell in der Flugzeugindustrie werden Antriebssysteme mit einer Leistungsdichte von 8 kW/kg benötigt.

Heute werden in der Regel nur für Modellflugzeuge elektrische Antriebssysteme eingesetzt. Von der Firma Geiger Engineering ist beispielsweise ein hochpoliger Motor als Flugzeugelektromotor ohne Getriebe bekannt. Er besitzt eine Magnetpolzahl von 42 und eine Leistung von 20 kW bei einer Grenzdrehzahl von 2500 rpm. Für die Startphase hat dieser Motor eine Leistungsdichte von 3,6 kW/kg.

Transversalflussmotoren als Rotations- oder Torque-Motoren zeichnen sich durch eine Ringwicklung aus, und der magnetische Fluss verläuft transversal (senkrecht) zur Drehebene. Bei dreiphasigen Transversalflussmotoren hat jede Phase üblicherweise eine eigene permanente Erregung. Es sind aber auch Transversalflussmotoren bekannt, bei denen die drei Phasen von nur einem Permanentmagnetsystem gespeist werden. Transversalflussmotoren besitzen die Möglichkeit, hohe Polpaarzahlen zu verwirklichen und weisen damit kleine Polteilungen auf. Damit wird das Eigengewicht pro Pol klein und folglich ergibt sich ein günstiges Leistungsgewicht. Aufgrund der Ringwicklung bei Transversalflussmotoren entfallen darüber hinaus die Wickelköpfe.

Aus der Druckschrift EP 1 063 754 A2 ist eine Transversalflussmaschine bekannt mit über den Umfang des Rotors der Maschine angeordneten Permanentmagneten in einer Anzahl entsprechend der Polzahl der Maschine und allenfalls zwischen den Permanentmagneten angeordneten Flussleitstücken aus magnetisch leitfähigem Material, und mit über den Umfang des Stators der Maschine angeordneten Polelementen zur Aufnahme von Wicklungen zur Erhöhung eines magnetischen Flusses und zur Leitung des magnetischen Flusses. Zur Reduktion der magnetischen Verluste, insbesondere der Eisenverluste sowie der durch Streufelder hervorgerufenen Verluste im Stator, und somit zur Erhöhung der Leistungsausbeute des Wirkungsgrads der Maschine ist vorgesehen, dass zumindest ein Teil der Polelemente des Stators, vorzugsweise jene Teile, in welchen der magnetische Fluss von der radialen Richtung abweicht, aus magnetisch isotropen Material, beispielsweise aus magnetischem Sinterwerkstoff besteht.

Darüber hinaus offenbart die Druckschrift EP 1 005 136 A1 eine ein- oder mehrphasige Transversalflussmaschine mit am Rotor in Umfangsrichtung angeordneten Permanentmagneten in einer Anzahl entsprechend der Polzahl der Maschine mit allenfalls zwischen den Permanentmagneten angeordneten Flussleitstücken, und mit am Stator in Umfangsrichtung aufeinanderfolgend angeordneten U-Jochen. Zur Steigerung des Drehmoments bei gleichzeitig möglichst einfacher und billiger Konstruktion ist vorgesehen, dass die U-Joche und bzw. oder die Permanentmagnete oder allfälligen Flussleitstücke gegenüber einer zur Drehachse der Maschine parallelen Richtung vorteilhafterweise um eine Polteilung oder ungeradzahliges Vielfaches der Polteilung versetzt orientiert sind.

Die Aufgabe der vorliegenden Erfindung besteht darin, die Leistungsdichte einer Transversalflussmaschine weiter zu erhöhen.

Erfindungsgemäß wird diese Aufgabe gelöst durch eine Transversalflussmaschine mit
- einem ersten Aktivteil,
- einem zweiten Aktivteil, das zur Bewegung entlang einer vorgegebenen Bewegungsrichtung relativ zu dem ersten Aktivteil mit diesem in magnetischer Wechselwirkung steht, wobei
- das zweite Aktivteil mit einer Magneteinrichtung ausgestattet ist, und wobei
- die Magneteinrichtung ein Halbach-Array aufweist.

In vorteilhafter Weise ist also die Transversalflussmaschine mit einer Magneteinrichtung ausgestattet, die ein oder mehrere Halbach-Arrays aufweist. Derartige Halbach-Arrays weisen eine kontinuierlich sich ändernde Magnetisierungsrichtung auf oder stellen eine spezielle Konfiguration von Permanentmagnetsegmenten dar, deren Magnetisierungsrichtung gegeneinander jeweils um einen bestimmten Winkelwert in Richtung der Längsachse des Arrays gekippt ist. Dadurch wird die Flussdichte auf der einen Seite des Halbach-Arrays erhöht und auf der gegenüberliegenden Seite abgeschwächt. Somit kann auf Flusssammler mit hohem Gewicht verzichtet werden, so dass letztlich die Leistungsdichte der Transversalflussmaschine steigt.

In einer Ausgestaltung können mehrere Halbach-Arrays in Bewegungsrichtung voneinander beabstandet an dem zweiten Aktivteil angeordnet sein, wobei die Halbach-Arrays in dem zweiten Aktivteil einen magnetischen Fluss senkrecht zur Bewegungsrichtung hervorrufen. Dabei kann vorgesehen sein, dass in Bewegungsrichtung nur über jedem zweiten der Halbach-Arrays am ersten Aktivteil ein magnetisches Rückschlusselement angeordnet ist. Hierdurch lässt sich das Gewicht der Transversalflussmaschine weiter reduzieren.

Gemäß einer anderen Ausführungsform weist das zweite Aktivteil zwei voneinander beabstandete Halbach-Arrays auf, die sich in Bewegungsrichtung parallel zueinander und im Wesentlichen über die Gesamtausdehnung des zweiten Aktivteils erstrecken, so dass in dem zweiten Aktivteil ein magnetischer Fluss parallel zur Bewegungsrichtung hervorgerufen wird. Dabei kann das erste Aktivteil in Bewegungsrichtung abwechselnd I- und U-förmige Rückschlusselemente besitzen, wobei ein elektrischer Leiter durch die U-förmigen Rückschlusselemente verläuft. Damit lässt sich der magnetische Fluss geschlossen um die Leiterbahn führen.

In einer anderen Ausführungsform weist das erste Aktivteil magnetische Rückschlusselemente auf, die relativ zu der Bewegungsrichtung um eine Polteilung geschrägt sind. Durch die Schrägung kann der magnetische Fluss einen sehr kurzen Weg einnehmen.

Vorzugsweise handelt es sich bei der Transversalflussmaschine um eine drei-phasige Maschine, wobei das zweite Aktivteil senkrecht zur Bewegungsrichtung einen dreieckigen Querschnitt besitzt, Halbach-Arrays an drei Mantelflächen des zweiten Aktivteils angeordnet sind und jedes Halbach-Array auf einer der Mantelflächen zu einem jeweiligen Halbach-Array auf einer anderen der Mantelflächen um 120° elektrisch versetzt ist. Damit kann die Transversalflussmaschine auch für das übliche dreiphasige Drehstromdrehstromsystem eingesetzt werden.

Das oder die Halbach-Arrays weisen entlang ihrer jeweiligen Längsachse mehrere Segmente auf, wobei die magnetischen Orientierungen von zwei benachbarten der Segmente in Richtung der Längsachse jeweils vorzugsweise um 45°, 90° oder einem anderen vorgegebenen Winkel außer 0° zueinander gekippt sind. Je nach Länge des Halbach-Arrays kann so die geeignete Staffelung, d.h. der Kippwinkel von Segment zu Segment, festgelegt werden. Bei einem idealen Halbach-Array ändert sich die Magnetisierung kontinuierlich, insbesondere sinusförmig.

Die Transversalflussmaschine ist vorzugsweise als mehrphasiger Torque-Motor ausgebildet. Sie kann aber auch beispielsweise als Linearmotor oder auch als Generator realisiert werden. Bei einem Torque-Motor stellt das zweite Aktivteil mit den Halbach-Arrays vorzugsweise den Rotor dar. Damit kann der Rotor sehr massearm gestaltet werden. Im Fall eines Linearmotors ist es ebenfalls günstig, wenn das zweite Aktivteil das bewegte Teil, insbesondere das Sekundärteil ist. Durch ein massearmes Sekundärteil lässt sich wiederum eine hohe Dynamik des Motors erreichen.

Ferner ist es vorteilhaft, wenn das zweite Aktivteil hohl ausgebildet ist und von einem Kühlmittel durchströmt wird. Mit der Kühlung im Inneren des zweiten Aktivteils kann eine höhere Leistungsdichte realisiert werden.

Die vorliegende Erfindung wird nun anhand der beigefügten Zeichnungen näher erläutert, in denen zeigen:
- FIG 1: einen Teil eines Rotors einer drei-phasigen Transversalflussmaschine mit Halbach-Arrays quer zur Bewegungsrichtung;
- FIG 2: ein Schema des abgewickelten Rotors von FIG 1;
- FIG 3: eine dreidimensionale Ansicht eines Abschnitts eines Transversalflussmotors mit einem Rotor von FIG 1;
- FIG 4: eine Ansicht eines Rotors mit Halbach-Arrays einer Transversalflussmaschine gemäß einer anderen Ausführungsform;
- FIG 5: der abgewickelte Rotor von FIG 4;
- FIG 6: einen Querschnitt durch die Transversalflussmaschine mit dem Rotor von FIG 4;
- FIG 7: die Ringstruktur eines Transversalflussmotors von FIG 6;
- FIG 8: eine dreidimensionale Ansicht eines Abschnitts des Transversalflussmotors von FIG 7 und
- FIG 9: eine Ansicht eines Rotors eines Transversalflussmotors mit Halbach-Arrays gemäß einer weiteren Ausführungsform.

Die nachfolgend näher geschilderten Ausführungsbeispiele stellen bevorzugte Ausführungsformen der vorliegenden Erfindung dar.

Generell betrifft die vorliegende Erfindung eine mehrphasige Transversalflussmaschine. Die nachfolgenden Beispiele beziehen sich auf drei-phasige Transversalflussmotoren, deren Aufbauprinzip jedoch auch auf andere Transversalflussmaschinen übertragbar ist.

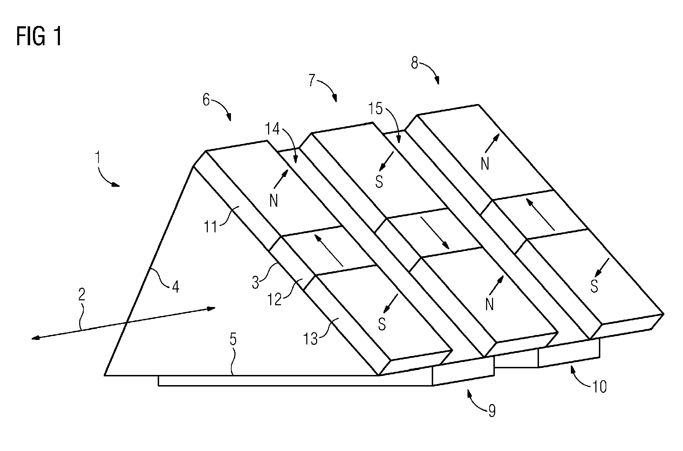

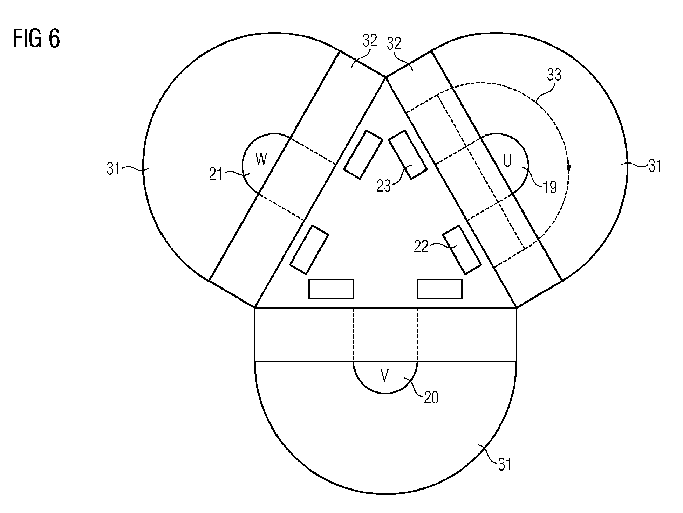

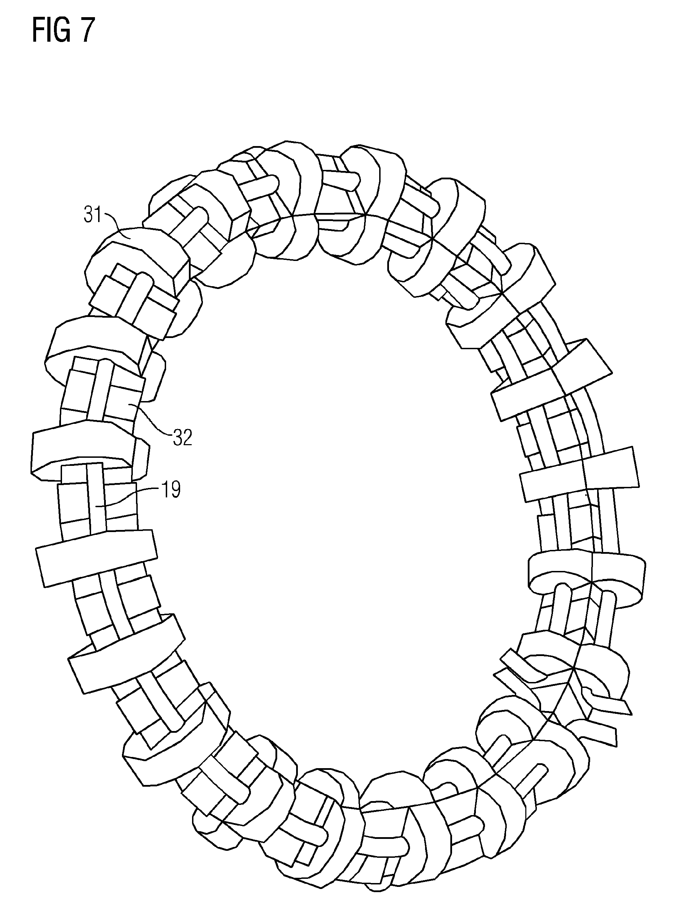

Der prinzipielle Aufbau eines Transversalflussmotors für drei Phasen kann in FIG 7 erkannt werden. Hier handelt es sich um einen Torque-Motor, der also einen geschlossenen Ring darstellt. In seinem Inneren verläuft ein Rotor mit beispielsweise dreieckförmigem Querschnitt, wie dies in FIG 6 angedeutet ist. Ein Abschnitt eines derartigen Rotors ist auch in FIG 1 dargestellt. Der Rotor ist ringförmig und besitzt hier einen dreieckigen Querschnitt. Mit anderen Worten besitzt das zweite Aktivteil der Transversalflussmaschine, d. h. der Rotor 1, in Bewegungsrichtung 2 (in FIG 1 mit einem Doppelpfeil angedeutet, da die Bewegung in beiden Richtungen erfolgen kann) abschnittsweise im Wesentlichen die Form eines Prismas. Ein derartiger prismenförmiger Abschnitt des Rotors 1 ist in FIG 1 wiedergegeben. Der Rotorring bzw. das Dreiecksprisma besitzt drei Seitenflächen 3, 4 und 5. Im Beispiel von FIG 1 sind lediglich an der Seitenfläche 3 magnetische Halbach-Arrays 6, 7, 8 dargestellt. Auf der unteren Seitenfläche 5 sind die Halbach-Arrays 9, 10 lediglich angedeutet. Auf der dritten Seitenfläche 4 sind sie nicht sichtbar.

Die Halbach-Arrays 6 bis 10 sind auf dem Rotor 1 senkrecht zur Bewegungsrichtung 2 angeordnet. D. h. die Längsachse jedes Halbach-Arrays 6 bis 10 verläuft quer zur Bewegungsrichtung 2. Zwischen zwei Halbach-Arrays 6, 7, 8 befindet sich jeweils eine Lücke 14, 15.

Anhand des Halbach-Arrays 6 wird der prinzipielle Aufbau eines solchen Arrays kurz erläutert. Das Halbach-Array 6 besteht aus mehreren Segmenten 11, 12, 13. Die Magnetisierungsrichtung des ersten Segments 11 weist an seiner Oberfläche senkrecht nach außen. Das Segment kann daher als Nordpol N bezeichnet werden. Demgegenüber weist die Magnetisierungsrichtung des Segments 13 senkrecht in die Oberfläche, so dass sich ein Südpol S ergibt. Zwischen den Segmenten 11 und 13 befindet sich ein Segment 12, dessen Magnetisierungsrichtung entlang der Längsachse des Halbach-Arrays 6 verläuft. Seine Magnetisierungsrichtung ist also sowohl gegenüber der Magnetisierungsrichtung von Segment 13 als auch der von Segment 11 um 90° gekippt. Dadurch ergibt sich das typische Halbach-Phänomen, dass sich das magnetische Feld auf der einen Seite (der nach außen gewandten Prismenseite) verstärkt und auf der gegenüberliegenden Seite (zum Inneren des Prismas gerichtet) geschwächt wird.

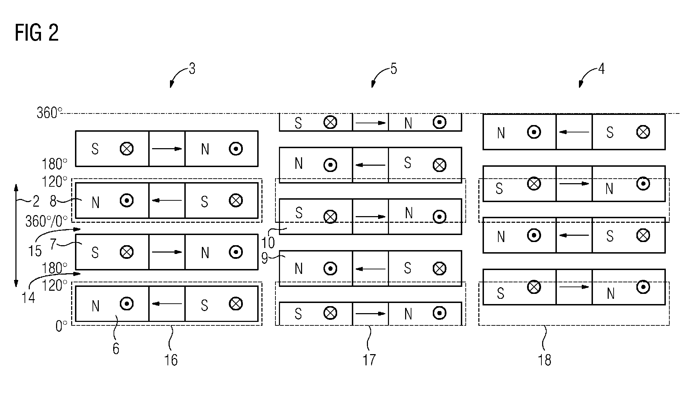

In FIG 2 ist der Rotor von FIG 1 in abgewickelter Form dargestellt. D.h. die Seitenflächen 3, 4 und 5 sind hier nebeneinander dargestellt. Es sind dort auch die Halbach-Arrays 6, 7, 8 auf der Seite 3 und die Halbach-Arrays 9, 10 auf der anderen Seitenfläche 5 zu erkennen. Die Halbach-Arrays der Seite 5 sind gegenüber den Halbach-Arrays von Seite 3 um 120° elektrisch versetzt. Der elektrische Phasenversatz ist in FIG 2 links dargestellt. So ist unmittelbar zu erkennen, dass das Halbach-Array 9 gegenüber dem Halbach-Array 6 um 120° elektrisch versetzt ist. Die 120° ergeben sich aus dem DreiPhasen-System. Die Halbach-Arrays auf der Seite 4 sind gegenüber denjenigen von Seite 5 ebenfalls um 120° elektrisch versetzt. Gleiches gilt dann zwischen den Halbach-Arrays von Seite 4 und Seite 3.

In dem Beispiel von FIG 2 besitzt ein Halbach-Array in der Bewegungsrichtung 2 die Breite von 120° elektrisch. Eine Lücke 14, 15 besitzt die Breite von 60° elektrisch. Prinzipiell kann die Breite der Halbach-Arrays und der Lücken in gewissen Schranken frei gewählt werden. In Summe müssen sich bei der vorliegenden Konfiguration 180° elektrisch ergeben, so dass beispielsweise auch eine Halbach-Array-Breite von 100° und eine Lückenbreite von 80° prinzipiell gewählt werden könnte.

Das erste Aktivteil, hier der Stator, weist magnetische Rückschlüsse 16, 17, 18 auf, die sich in Bewegungsrichtung 2 nach 360° elektrisch wiederholen. Die Rückschlüsse 16, 17, 18 verlaufen in der Draufsicht von FIG 2 deckungsgleich mit den darunter liegenden Halbach-Arrays und erstrecken sich damit auch senkrecht zur Bewegungsrichtung 2.

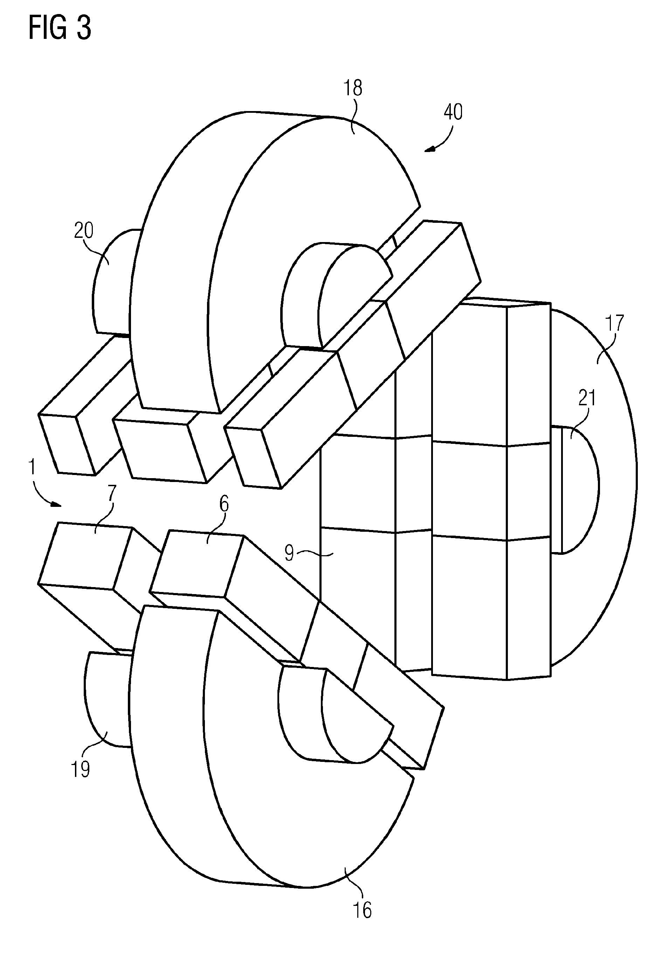

In FIG 3 ist ein kurzer Abschnitt (zwei Polteilungen) eines Transversalflussmotors mit einem Rotor von FIG 1 bzw. FIG 2 dargestellt. Dort ist auch der dreieckförmige Aufbau des Rotors mit den Halbach-Arrays 6, 7, 9 (und weitere nicht näher gekennzeichnete) ersichtlich. Die bogenförmigen Rückschlüsse 16, 17 und 18 sind Teil des ersten Aktivteils der Transversalflussmaschine, also hier des Stators 40. Jeder der Rückschlüsse 16, 17, 18 verläuft um einen jeweiligen Leiter 19, 20, 21, die die Phasen U, V und W des Drehstromsystems führen. Die Rückschlüsse 16 bis 18 können aus einem ferromagnetischen Pulverwerkstoff (z.B. SMC - Soft Magnetic Composite) oder auch aus Elektroblechen gebildet sein. Sie besitzen hier ebenfalls eine Breite von 120° elektrisch und sind um den Rotor ohne Versatz zueinander angeordnet. Im Durchschnitt befindet sich also über jedem zweiten Halbach-Array des Rotors 1 ein magnetischer Rückschluss des Ständers 2.

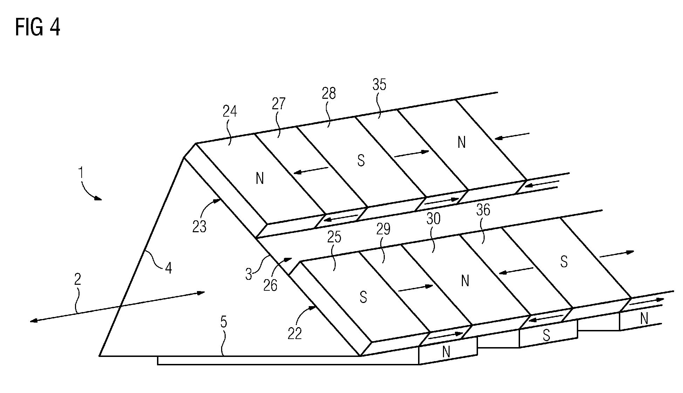

Eine weitere Ausführungsform einer erfindungsgemäßen Transversalflussmaschine ist in den FIG 4 bis FIG 8 gezeigt. In FIG 4 ist wiederum ein Rotor 1 dargestellt, der prinzipiell die Struktur des Rotors von FIG 1 aufweist, wobei jedoch zwei Halbach-Arrays 22, 23 entlang der Bewegungsrichtung 2 verlaufen. D.h. die Längsachsen der Halbach-Arrays erstrecken sich in Bewegungsrichtung 2, was auch bedeutet, dass die einzelnen magnetisch unterschiedlich orientierten Segmente in Bewegungsrichtung 2 hintereinander angeordnet sind. Die Orientierungen der einzelnen Segmente der Halbach-Arrays ergeben sich aus den Bezeichnungen N und S sowie aus den in FIG 4 eingezeichneten Pfeilen. Aus den Nordpolen N zeigt die magnetische Orientierung wiederum nach außen und bei den Südpolen S nach innen. Quer zur Bewegungsrichtung stehen sich ein Nordpolsegment 24 des einen Halbach-Arrays 23 und ein Südpolsegment 25 des anderen Halbach-Arrays 22 auf der Seitenfläche 3 des Rotors mit einer dazwischen befindlichen Lücke 25 gegenüber. Die Lücke 25 verläuft wie die Halbach-Arrays entlang des gesamten Rotors 1. In Bewegungsrichtung schließt sich an das Nordpolsegment 24 ein Magnetsegment 27, dessen magnetische Orientierung zu dem Nordpolsegment 24 weist, und ein Südpolsegment 28 sowie ein Magnetsegment 35 dessen Magnetisierung vom Südpolsegment weg gerichtet ist, in dem Halbach-Array 23 an. In dem Halbach-Array 22 schließt sich in Bewegungsrichtung an das Südpolsegment 25 ein magnetisches Segment 29, dessen Magnetorientierung von dem Südpolsegment 26 weg weist, sowie ein Nordpolsegment 30 und ein Magnetsegment 36, dessen Magnetisierung zum Nordpolsegment hin gerichtet ist, an. Diese Halbachstruktur wiederholt sich für beide Halbach-Arrays 22, 23 in Bewegungsrichtung 2.

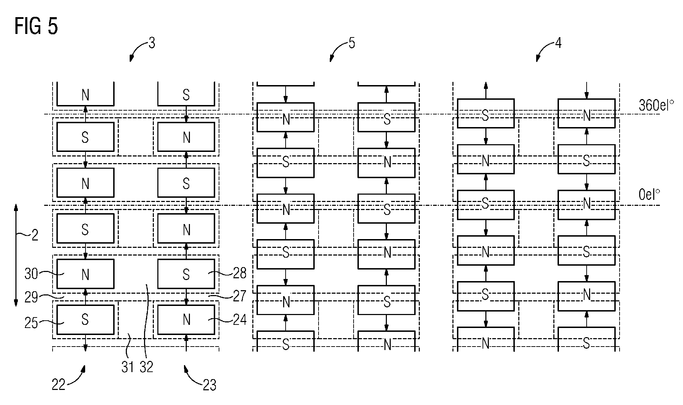

In FIG 5 ist der Rotor 1 wieder in abgewickelter Form dargestellt. Auch hier ist zu erkennen, dass sich die Halbach-Arrays 22 und 23 quasi unendlich fortsetzen. In einem Winkelbereich von 360° elektrisch befinden sich im Durchschnitt zwei Pole, nämlich ein Südpol S und ein Nordpol N. Die magnetischen Segmente 27, 29 mit magnetischer Orientierung parallel zur Bewegungsrichtung 2 sind in FIG 5 lediglich mit Pfeilen symbolisiert.

Senkrecht über den Halbach-Arrays befinden sich abwechselnd in Bewegungsrichtung U-Kerne 31 und I-Kerne 32 des Stators. Jeder dieser Kerne sorgt für einen Rückschluss von jeweils einem Nordpol zu einem gegenüberliegenden Südpol im jeweils anderen Halbach-Array. In FIG 5 sind diese U-Kerne und I-Kerne gestrichelt dargestellt.

Der Flussverlauf geht beispielsweise aus einem Nordpolsegment N heraus in einen U-Kern 31 zu einem Südpolsegment S (Fluss in radialer Richtung), von da über ein Halbach-Segment zu einem in FIG 5 darunter liegenden Nordpolsegment N (Fluss in Umfangsrichtung) und von da über einen I-Kern zu einem Südpolsegment S des gegenüberliegenden Halbach-Arrays (Fluss in radialer Richtung) und von dort zurück zum Ausgangs-Nordpolsegment über ein dazwischen liegendes Halbach-Segment (Fluss in Bewegungsrichtung). Die Flussführung erfolgt über dem jeweiligen elektrischen Leiter in den U-Kernen und unter dem Leiter zwischen Rotor und Leiter in den I-Kernen.

Diese Flussführung 33 ist aus einer anderen Perspektive (Blickrichtung entlang der Bewegungsrichtung 2) in FIG 6 dargestellt. Der Querschnitt durch die Transversalflussmaschine von FIG 6 zeigt dabei U-Kerne 31 und I-Kerne 32. Der magnetische Fluss verläuft im Fall des Leiters 19 also um diesen herum durch den U-Kern 31 zu dem Halbach-Array 22 und durch den I-Kern 32 zurück von dem Halbach-Array 22 zu dem Halbach-Array 23.

Eine Trägerstruktur der Halbach-Arrays ist in FIG 6 nicht dargestellt. Zwischen den statorseitigen U- und I-Kernen und den rotorseitigen Halbach-Arrays befindet sich jeweils ein Luftspalt. Prinzipiell kann auf die I-Kerne auch verzichtet werden. Dadurch erhöht sich jedoch der Streufluss

Die gesamte Ringstruktur einer Transversalflussmaschine mit einem derartigen Aufbau ist in FIG 7 wiedergegeben. Insbesondere sind dort am Umfang gleich verteilt die U-Kerne 31 und die I-Kerne 32 zu erkennen. Über den I-Kernen 32 und unter den U-Kernen 31 verläuft der Leiter 19.

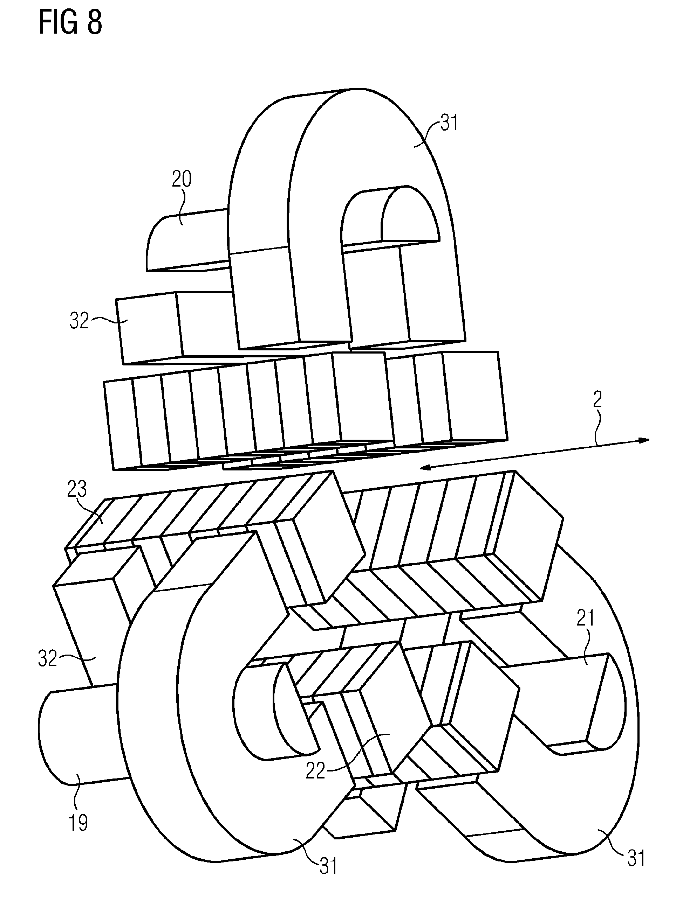

FIG 8 zeigt ähnlich wie FIG 3 einen kurzen Abschnitt des Rings von FIG 7 bzw. eines entsprechenden Transversalflussmotors. Die in Bewegungsrichtung 2 verlaufenden Halbach-Arrays 22, 23 besitzen hier quadratischen Querschnitt. Sie können aber auch beispielsweise dreieckförmigen Querschnitt aufweisen, so dass die an den Spitzen des Dreiecks gelegenen Halbach-Arrays näher aneinander angeordnet werden können. Die Halbachsegmente sind hier in Bewegungsrichtung sehr kurz dargestellt. Dies soll symbolisieren, dass bei aufeinander folgenden Halbachsegmenten die magnetische Orientierung nicht nur um 90° gekippt sein kann, sondern auch mit einem anderen Winkel, z.B. 45° etc.

Bei dieser Anordnung ergeben sich gegenüber dem Ausführungsbeispiel von FIG 3 die zusätzlichen Vorteile, dass ein geringerer Streufluss wegen der geschlossenen Flussführung und außerdem eine bessere Ausnutzung des gesamten magnetischen Flusses der vorhandenen Permanentmagnete gegeben ist. Darüber hinaus kann die Kantenlänge des Rotorquerschnittsdreiecks beliebig gewählt werden und beeinflusst nicht die Auslegung der Halbach-Arrays. Des Weiteren können hohe Polpaarzahlen ausgeführt werden.

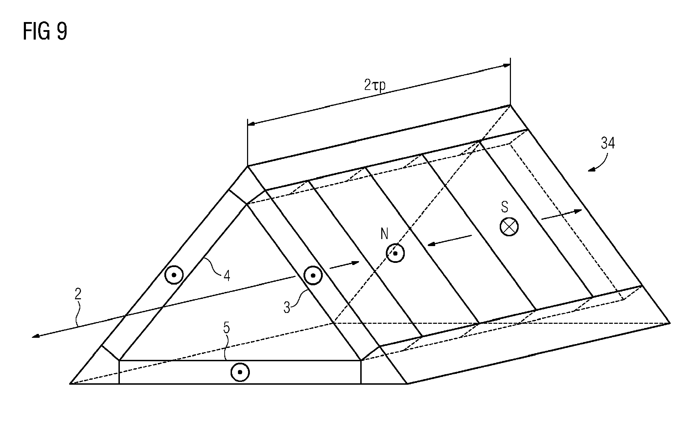

In FIG 9 ist ein weiteres Ausführungsbeispiel eines Rotors eines erfindungsgemäßen Transversalflussmotors dargestellt. Hier ist auf jeder Seite 3, 4, 5 des Rotors mit dreieckigem Querschnitt jeweils nur ein einziges Halbach-Array 34 notwendig. Das Halbach-Array 34 erstreckt sich ebenfalls in Bewegungsrichtung 2. Die Halbach-Arrays sind auf den drei Seitenflächen 3, 4 und 5 nicht zueinander versetzt. Daher sind hier Ständerrückschlüsse (in FIG 9 nicht eingezeichnet) vorzusehen, die geschrägt sind. D.h. ein Rückschluss muss beispielsweise von dem Nordpolsegment N, oben auf der Seitenfläche 3, zu dem Südpolsegment S, unten auf der Seitenfläche 4, verlaufen. Die Polteilung *τₚ* entspricht dem Abstand zwischen dem Nordpolsegment N und dem Südpolsegment S, bezogen auf deren Mitte.

Bei den dreiphasigen Transversalflussmotoren hat jede Phase ihre eigene permanente Erregung. Die Erregung erfolgt hier durch Halbach-Arrays, die sich auf den drei Seiten des Rotors mit dreieckförmigem Querschnitt befinden. Aufgrund der Halbach-Magnete entfällt der eisenbehaftete Flusssammler, der notwendig ist, wenn in der Transversalflussmaschine nur Permanentmagnete in bipolarer Anordnung im zweiten Aktivteil bzw. im Rotor oder Läufer verwendet werden. Der Läufer bzw. Rotor kann also von einem (ringförmigen) nicht magnetisch leitenden Kern (z.B. A-magnetischer Stahl oder Aluminium) gebildet werden. Der Kern kann auch hohl sein, um mit einer Kühlflüssigkeit oder mit einer Heat-Pipe die Rotorwärme abzuführen.

In den vorliegenden Beispielen ist ein Polpaar immer mit einem Nordpol und einem Südpol und einem dazwischen liegenden Magnetsegment, dessen Magnetorientierung um 90° gekippt ist, dargestellt. Am Ende eines Polpaars ist ein derartiges Magnetsegment ebenfalls angefügt. Ein Polpaar lässt sich aber beispielsweise auch aus fünf Teilsegmenten ausführen. Die zusätzlichen Magnetsegmente weisen dann eine Magnetisierungsrichtung von beispielsweise 45° auf und werden jeweils zwischen den Polen und den orthogonal magnetisierten Magnetstücken eingefügt. Die Segmentierung der Halbach-Arrays kann aber auch noch weiter verfeinert werden, wobei der Kippwinkel der Magnetisierungsrichtung von Segment zu Segment dann noch weiter verkleinert ist.

Bei der Realisierung einer Transversalflussmaschine für drei Phasen mit Rotor, der einen dreieckigen Querschnitt aufweist, können die Dreiecke an ihren spitzen Ecken auch abgeflacht werden. Damit kann das innenliegende "Dreieck" (Rotor) an einer Rotationshalterung befestigt werden und mit der Rotornabe verbunden werden.

In den oben beschriebenen Ausführungsbeispielen besitzen die Rotoren einen dreieckförmigen Querschnitt. Sie können prinzipiell jedoch auch einen anderen Querschnitt, z.B. einen hufeisenförmigen, einen quadratischen oder einen sonstigen mehreckigen Querschnitt besitzen. Insbesondere kann der Rotor auch sechseckig sein, wobei die Speisung über 2 . 3 Phasen erfolgt, um die pulsierenden Anziehungskräfte (sin²-Kräfte) zu kompensieren.

Für die Statoren kann eine Trägerstruktur aufgebaut werden, in die die einzelnen Rückschlüsse positionsgenau eingefügt werden und die Ringspulen eingehängt werden. Der Verguss bzw. die Tränkung der Ringwicklung kann dann in dieser Trägerstruktur erfolgen. Ggf. können auch Versteifungen aus Faserverbundwerkstoffen eingefügt werden.

Wie oben gezeigt wurde lässt sich somit ein drei-phasiger Transversalflussmotor mit gestaffelten Halbach-Arrays auf den Seiten eines Rotors mit dreieckförmigem Querschnitt realisieren, die alle drei Phasen mit dem Erregerfluss verbinden.

Darüber hinaus können auch die Ständerringleitungen (Hohlleiter) mit Flüssigkeitskühlung (z.B. Wasser oder Öl) versehen sein. Damit sind Stromdichten von 80 bis 100 A/mm² möglich. Heute werden maximal 10 A/mm² erreicht.

Ferner kann die Luftspaltinduktion zwischen Rotor und Stator über die Dicke der Permanentmagnete bzw. Halbach-Arrays gestaltet werden. Dabei kann eine sehr hohe Ausnutzung erreicht werden, da das Luftspaltinduktionsniveau um 50% höher angesetzt werden kann und die Stromdichte wegen der kurzen Ringleitung um den Faktor zehn.

Durch die Gestaltung der Luftspaltinduktion und durch die mehrphasige Anordnung kann die Geräuschbildung und die Momentenwelligkeit optimiert werden. Der größte Vorteil der erfindungsgemäßen Transversalflussmaschine besteht jedoch darin, dass Flusssammler im Läufer bzw. Rotor und damit deren Gewicht eingespart werden kann. Außerdem müssen die Ständerrückschlüsse nicht zwangsläufig geschrägt sein, so dass sie einfacher hergestellt werden können.

## Patentansprüche

1. Transversalflussmaschine mit
- einem ersten Aktivteil (40),
- einem zweiten Aktivteil (1), das zur Bewegung entlang einer vorgegebenen Bewegungsrichtung (2) relativ zu dem ersten Aktivteil mit diesem in magnetischer Wechselwirkung steht, wobei
- das zweite Aktivteil (1) mit einer Magneteinrichtung ausgestattet ist,
**dadurch gekennzeichnet, dass**
- die Magneteinrichtung ein Halbach-Array (6 bis 10, 22,23, 34,35,36) aufweist.

2. Transversalflussmaschine nach Anspruch 1, wobei mehrere Halbach-Arrays (6 bis 10, 22,23,34) in Bewegungsrichtung voneinander beabstandet an dem zweiten Aktivteil (1) angeordnet sind und die Halbach-Arrays in dem zweiten Aktivteil einen magnetischen Fluss senkrecht zur Bewegungsrichtung (2) hervorrufen.

3. Transversalflussmaschine nach Anspruch 2, wobei in Bewegungsrichtung (2) nur über jedem zweiten der Halbach-Arrays (6 bis 10, 22,23,34) am ersten Aktivteil ein magnetisches Rückschlusselement (16,17,18) angeordnet ist.

4. Transversalflussmaschine nach Anspruch 1, wobei das zweite Aktivteil (1) zwei voneinander beabstandete Halbach-Arrays (6 bis 10, 22,23,34) aufweist, die sich in Bewegungsrichtung (2) parallel zueinander im Wesentlichen über die Gesamtausdehnung des zweiten Aktivteils erstrecken, so dass in dem zweiten Aktivteil ein magnetischer Fluss parallel zur Bewegungsrichtung hervorgerufen wird.

5. Transversalflussmaschine nach Anspruch 4, wobei das erste Aktivteil in Bewegungsrichtung abwechselnd I- und U-förmige Rückschlusselemente (31,32) besitzt, und wobei ein elektrischer Leiter (19,20,21) durch die U-förmigen Rückschlusselemente verläuft.

6. Transversalflussmaschine nach Anspruch 1, wobei das erste Aktivteil (40) magnetische Rückschlusselemente aufweist, die relativ zu der Bewegungsrichtung um eine Polteilung geschrägt sind.

7. Transversalflussmaschine nach einem der vorhergehenden Ansprüche, die drei-phasig ist, das zweite Aktivteil (1) senkrecht zur Bewegungsrichtung (2) einen dreieckigen Querschnitt besitzt, Halbach-Arrays (6 bis 10, 22,23,34) an drei Mantelflächen (3,4,5) des zweiten Aktivteils angeordnet sind und jedes Halbach-Array auf einer der Mantelflächen zu einem jeweiligen Halbach-Array auf einer anderen der Mantelflächen um 120° elektrisch versetzt ist.

8. Transversalflussmaschine nach einem der vorhergehenden Ansprüche, wobei jedes Halbach-Array (6 bis 10, 22,23,34) mehrere Segmente (11,12,13,24,25,28,30) entlang seiner Längsachse aufweist, und wobei die magnetischen Orientierungen von zwei benachbarten der Segmente in Richtung der Längsachse jeweils um 45°, 90° oder einen anderen vorgegebenen Winkel außer 0° zueinander gekippt sind.

9. Transversalflussmaschine nach einem der vorhergehenden Ansprüche, die als mehrphasiger Torque-Motor ausgebildet ist.

10. Transversalflussmaschine nach einem der Ansprüche 7 bis 9, wobei das zweite Aktivteil (1) hohl ausgebildet ist und von einem Kühlmittel durchströmt ist.
